# EUROPEAN PATENT APPLICATION

(11) **EP 3 636 065 A1**
(43) Date of publication of application: **15.04.2020**
(21) Application number: 18200208.9
(22) Date of filing: 12.10.2018
(51) Int. Cl.: A01D 44/00

(54) **A METHOD OF COLLECTING AND TREATING WATER PLANTS THAT ARE LOCATED IN WATER AND CONTAIN GAS-FILLED BLADDERS AND A SYSTEM THEREFOR**

(71) Applicant: Damen 40 B.V., 4200 AA Gorinchem (NL)
(72) Inventor: Koning, Lennart, 1403 GL Bussum (NL); Porry, Jean Pierre, 97 222 Case Pilote Martinique (FR)
(74) Representative: De Vries & Metman

(57) **Abstract**

The invention concerns a method and system for collecting and treating water plants (4) that are located in water and contain gas-filled bladders, such as certain Sargassum species, the water plants (4) are collected and the gas-filled bladders of the collected plants (4) are destroyed, after which a remainder (4') of the water plants is put into water.

## Description

The present invention relates to a method of collecting and treating water plants that are located in water and contain gas-filled bladders, such as certain sargassum species.

The gas-filled bladders of the above-mentioned water plants create buoyancy. As a consequence, such water plants tend to cover the water surface. In certain areas this leads to serious problems, for example on Caribbean shores. The plants wash ashore, pile up on beaches, and decay, often causing a foul odor, releasing fumes of sulphur compounds that rust metals, can turn taps black in shore houses, damage modern conveniences, and cause respiratory problems, particularly for asthmatics. A high concentration of H₂S escaping from decaying sargassum, for example, irritates eyes and may even be dangerous to human health. The growing problem in the past years seems to be caused by the rise of sea temperature and the change of sea currents due to climate change. Also, nutriments from agricultural fertilizers and waste water from cities that end up in the sea could also promote explosive growth of the water plants. For many beach resorts and communities, sargassum weed makes beach cleanup a daily effort.

A method of collecting and treating water plants is known. In the known method the plants are collected by boats offshore and transported to a harbor. From there the collected water plants are transported to a remote location where bad-smelling fermentation gases from decaying plants do not disturb people. The known method reduces the amount of plants that wash ashore, but requires a lot of effort.

An object of the invention is to provide an efficient method of collecting and treating water plants that are located in water and contain gas-filled bladders.

This object is accomplished with the method according to the invention, wherein the water plants are collected and the gas-filled bladders of the collected plants are destroyed, after which a remainder of the water plants is put into water.

Due to destroying the gas-filled bladders the remainder of the water plants loose buoyancy properties and tend to sink to the bottom or seafloor. The sunken remainder may provide a food source to fishes and invertebrates in deep sea.

The gas-filled bladders may look like cherries and may be filled with oxygen, but other portions of a water plant may contain gas-filled bladders or gas-filled cavities, for example in its stem.

After destroying the gas-filled bladders the remainder of the plants may be put into water in a different area than a region where the water plants are collected. In this case the water plants or the remainder of the plants may be collected by a ship for temporarily storing the collected substance. If the plants are collected before destroying the gas-filled bladders the step of destroying may be performed on the ship or just before putting the remainder into water at a desired destination. Discharging the remainder of the plants in a different area may be advantageous if it is desired to distribute the remainder of the plants over a wide area. It is also possible that the plants are collected in a bay or a harbor where it is not allowed to discharge the remainder of the plants. In that case the remainder may be transported to an offshore region where it is discharged. The different area may be a deep water location such that the remainder of the plants sinks to a dark region where the remainder cannot grow or reproduce under influence of light.

In a preferred embodiment the gas-filled bladders are destroyed by chopping or shredding the water plants, since additionally cutting the plants into small pieces appears to optimize the sinking behavior of the remainder of the plants. It also appears that the remainder of the plants remain sunken. The chopped or shredded plants may be fresh plants or already (partly) decayed plants.

The water plants may be freely floating on the water surface.

The water plants may comprise pelagic sargassum. More specifically, pelagic sargassum may comprise at least one of the following sargassum species: sargassum natans and sargassum fluitans. These species form an actual problem on the Carribean shores.

The invention is also related to a system for collecting and treating water plants that are located in water and contain gas-filled bladders, such as certain sargassum species, comprising a suction device for collecting water plants and a destruction device for destroying the gas-filled bladders and breaking down the collected water plants into smaller pieces. The suction device may be located at a ship or suspending from a ship such that is sucks water plants from a water surface. The suction device may also suck water such that it sucks a mixture of water and water plants.

In a particular embodiment the destruction device comprises a chopper or shredder, which cuts the plants into small pieces and simultaneously destroys the gas-filled bladders. Alternative destruction devices are conceivable. For example, the destruction device may comprise a filter-like grid at an outlet side of the suction device through which the water plants are pressed such that the plants are torn apart into small pieces thereby also destroying the gas-filled bladders.

In a specific embodiment the chopper or shredder is a first chopper or shredder which is located upstream of the suction device, wherein the system is also provided with a second chopper or shredder which is located downstream of the suction device. The first chopper or shredder may chop or shred the water plants into relatively large pieces in order to facilitate the flow of the plants through the suction device, whereas the second chopper or shredder may chop or shred the resulting pieces further into relatively small pieces. It is noted that water plants are often ropy, which might lead to obstruction of the suction device if the first chopper or shredder is omitted.

The chopper(s) or shredder(s) may be provided with rotating cutting knives.

In a practical embodiment the first chopper or shredder is provided with rotating cutting knives and the suction device is a centrifugal pump which also drives the first chopper or shredder.

The first and second choppers or shredders may have variable rotation speeds. The input speed of the water plants at the choppers or shredders may be influenced by varying pipe diameters, for example.

In a particular embodiment the system has a nozzle located downstream of the suction device for discharging a remainder of the water plants into water, which nozzle is located below the water surface and directed downwardly. This provides an initial downward speed of the sinking remainder of the plants.

The invention will hereafter be elucidated with reference to very schematic drawings showing embodiments of the invention by way of example.
Fig. 1 is a plan view of boats on water, illustrating an embodiment of the method according to the invention.
Fig. 2 is a front view of the boats as shown in Fig. 1.
Fig. 3 is an illustrative view of an embodiment of the system according to the invention.
Figs. 4 and 5 are similar views as Fig. 1, but showing alternative embodiments.

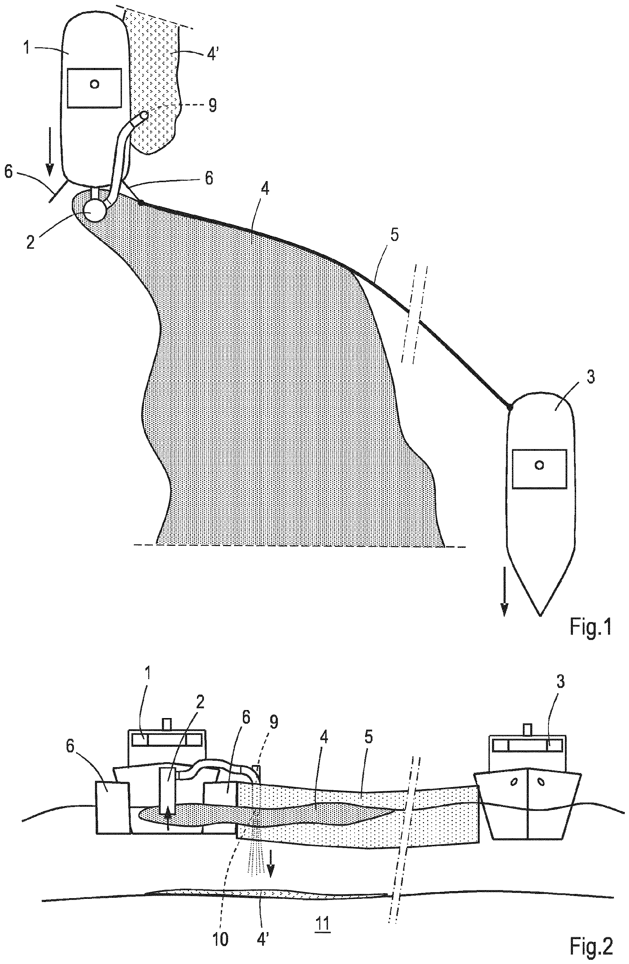

Figs. 1 and 2 show a workboat 1 which is provided with a suction device in the form of a pump 2, a tug boat 3 and an island of sargassum 4 located between the workboat 1 and the tug boat 3. Sargassum 4 is a genus of brown seaweed that spends its life floating. It is a type of water plant that contains gas-filled bladders. Fig. 2 illustrates that the island of sargassum 4 is freely floating at the water surface of a sea. Although the island of sargassum 4 is shown as a small area, it may have different shapes and dimensions in reality. It may be an area having a length of 10 km and a width of 1 km, for example. Sometimes several elongate islands may be spread all over the sea in long lines. The thickness of an island of sargassum 4 may be 1 meter.

In the embodiment as shown in Figs. 1 and 2 the island of sargassum 4 is elongate and the workboat 1 and the tugboat 3 sail in longitudinal direction of the island 4 as indicated by arrows in Fig. 1. Figs. 1 and 2 illustrate that the island of sargassum 4 is gathered at a location close to the workboat 1 by a net 5, which is fixed to both the workboat 1 and the tug boat 3 and which extends between both boats 1, 3. The tug boat 3 is operated such that the island of sargassum 4 is moved towards the pump 2. The pump 2 is suitable to suck water and sargassum 4 and is mounted at a front side of the workboat 1 and located in the water between two diverging plates 6 which form a funnel for guiding sargassum 4 to the pump 2. Figs. 1 and 2 show the net 5, but alternative means for moving sargassum 4 towards the pump 2 are conceivable, for example a tube or a cable.

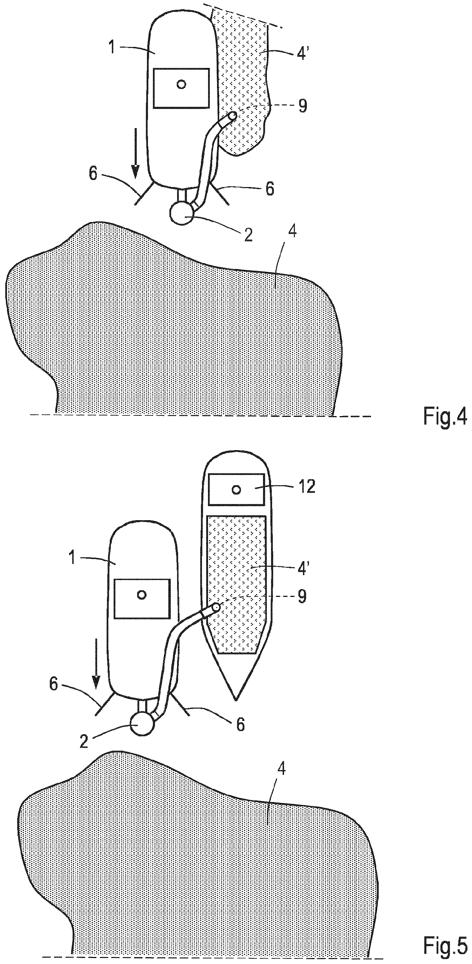

The situation as shown in Figs. 1 and 2 is typically used in case of an elongate island of sargassum 4. In another embodiment the net 5 and the tug boat 3 are omitted, see Fig. 4. This situation typically occurs when the island of sargassum 4 is a relative large island in length and width. In that case the workboat 1 moves into or along an edge of the island in order to suck the mixture of water and sargassum 4; also in this embodiment the diverging plates 6 facilitate collecting sargassum 4 at the pump 2.

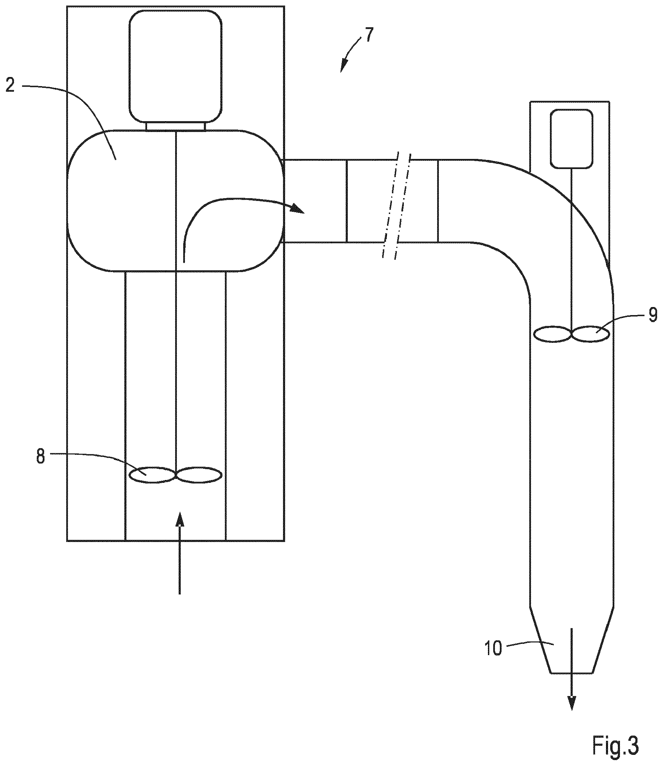

Fig. 3 shows the pump 2 as part of an embodiment of a system 7 for collecting and treating water plants according to the invention. The pump 2 is a centrifugal pump which sucks water including sargassum 4 in upward direction. The system 7 is provided with a first shredder or chopper 8 located in an inlet pipe upstream of the pump 2 and a second shredder or chopper 9 which is located in an outlet pipe downstream of the pump 2. The outlet pipe extends from the pump 2 to a location halfway the workboat 1, as shown in Figs. 1, 4 and 5, but it may also be positioned at a different location. Both choppers 8, 9 comprise moving knives for chopping collected sargassum 4. The first chopper 8 chops sargassum 4 into relatively large pieces in order to avoid obstructions in the pump 2, whereas the second chopper 9 chops the resulting pieces further to relatively small pieces. Fig. 3 shows that the first chopper 8 is driven by the pump 2, as well, but in an alternative embodiment it may have separate driving means.

Due to chopping sargassum 4 in the system 7 the gas-filled bladders thereof are destroyed, whereas a remainder 4' comprises relatively small pieces, which appear to sink to the bottom 11 and remain there, see Fig. 2.

The system 7 as shown in Fig. 3 is provided with a nozzle 10, which is located downstream of the pump 2. The nozzle 10 is located below the water surface and directed downwardly, see Fig. 2. The nozzle 10 increases the discharging speed of chopped sargassum 4 and provides a faster sinking of the remainder 4'.

Figs. 1, 2 and 4 show that sargassum 4 is collected, chopped and directly put into the water at the same region of the sea, but in an alternative embodiment the remainder 4' may be discharged in a barge 12 and transported to a different area, for example where the sea has a larger depth, see Fig. 5. Such a situation typically occurs when sargassum 4 is collected in a shallow bay, whereas the remainder 4' is transported and put in the water at a deep sea location.

Since the pump 2 sucks a mixture of water and sargassum 4 it is also a mixture of the remainder 4' and water that leaves the pump 2. In order to minimize transportation of water by the barge 12 the discharged mixture may flow through a filter in order to collect the remainder 4' before it is discharged into the barge. It is also possible to discharge the mixture of water and the remainder 4' into the barge 12 and remove the water from the barge 12 before sailing to the different area.

The invention is not limited to the embodiments shown in the drawings and described hereinbefore, which may be varied in different manners within the scope of the claims and their technical equivalents. For example, the invention is also applicable to other water plants that are located in water and contain gas-filled bladders.

## Claims

1. A method of collecting and treating water plants (4) that are located in water and contain gas-filled bladders, such as certain sargassum species, wherein the water plants (4) are collected and the gas-filled bladders of the collected plants (4) are destroyed, after which a remainder (4') of the water plants is put into water.

2. A method according to claim 1, wherein the remainder (4') of the plants after destroying the gas-filled bladders is put into water in a different area than a region where the water plants (4) are collected.

3. A method according to claim 1 or 2, wherein the gas-filled bladders are destroyed by chopping or shredding the water plants (4).

4. A method according to any one of the preceding claims, wherein the water plants (4) are freely floating on the water surface.

5. A method according to any one of the preceding claims, wherein the water plants (4) comprise pelagic sargassum.

6. A method according to claim 5, wherein the pelagic sargassum comprises at least one of the following sargassum species: sargassum natans and sargassum fluitans.

7. A system (7) for collecting and treating water plants (4) that are located in water and contain gas-filled bladders, such as certain sargassum species, comprising a suction device (2) for collecting water plants (4) and a destruction device (8, 9) for destroying the gas-filled bladders and breaking down the collected water plants (4) into small pieces.

8. A system (7) according to claim 7, wherein the destruction device comprises a chopper (8, 9) or shredder.

9. A system (7) according to claim 8, wherein the chopper or shredder is a first chopper (8) or shredder which is located upstream of the suction device (2), wherein the system (7) is also provided with a second chopper (8) or shredder which is located downstream of the suction device (2) .

10. A system (7) according to claim 8 or 9, wherein the chopper(s) (7, 8) or shredder(s) is/are provided with rotating cutting knives.

11. A system (7) according to claim 9, wherein the first chopper (7) or shredder is provided with rotating cutting knives and the suction device is a centrifugal pump (2) which also drives the first chopper (7) or shredder.

12. A system (7) according to any one of the claims 7-11, wherein the system (7) has a nozzle (10) located downstream of the suction device (2) for discharging a remainder of the water plants (4') into water, which nozzle (10) is located below the water surface and directed downwardly.
